# EUROPÄISCHE PATENTSCHRIFT

(11) **EP 1 713 140 B1**
(45) Veröffentlichungstag und Bekanntmachung des Hinweises auf die Patenterteilung: **10.09.2008**
(21) Anmeldenummer: 05007989.6
(22) Anmeldetag: 12.04.2005
(51) Int. Cl.: H01M 8/04

(54) **Verfahren zur Detektierung einer Reaktanten-Unterversorgung in einer Brennstoffzelle eines Brennstoffzellenstapels sowie Brennstoffzellenanlage mit einem derartigen Brennstoffzellenstapel**
Process for the detection of a reactant undersupply in one fuel cell of a fuel cell stack and a fuel cell system with such a fuel cell stack
Procédé de détection d'un manque de réactant dans une pile à combustible d'un bloc de pile à combustible et un système de pile à combustible avec un tel bloc de pile à combustible

(43) Veröffentlichungstag der Anmeldung: 18.10.2006
(73) Patentinhaber: SIEMENS AKTIENGESELLSCHAFT, 80333 München (DE)
(72) Erfinder: Coerlin, Detlev, 91056 Erlangen (DE); Gellert, Harry, 91090 Effeltrich (DE); Stühler, Walter, 96114 Hirschaid (DE); Voitlein, Ottmar, 91475 Lonnerstadt (DE)

(56) Entgegenhaltungen:
- DE-A1- 10 213 478
- US-A- 5 397 655
- US-A1- 2005 053 814
- PATENT ABSTRACTS OF JAPAN Bd. 2003, Nr. 11, 5. November 2003 (2003-11-05) & JP 2003 215190 A (HIOKI EE CORP; TOYOTA MOTOR CORP), 30. Juli 2003 (2003-07-30)
- PATENT ABSTRACTS OF JAPAN Bd. 1996, Nr. 12, 26. Dezember 1996 (1996-12-26) & JP 08 213038 A (FUJI ELECTRIC CO LTD), 20. August 1996 (1996-08-20)

## Beschreibung

Verfahren zur Detektierung einer Reaktanten-Unterversorgung in einer Brennstoffzelle eines Brennstoffzellenstapels sowie Brennstoffzellenanlage mit einem derartigen Brennstoffzellen-stapel

Die Erfindung betrifft ein Verfahren zur Detektierung einer Reaktanten-Unterversorgung in einem Teilbereich eines Gasraumes einer Brennstoffzelle eines Brennstoffzellenstapels gemäß Oberbegriff des Patentanspruchs 1 sowie eine Brennstoffzellenanlage mit einem derartigen Brennstoffzellenstapel gemäß Oberbegriff des Patentanspruchs 6. Ein derartiges Verfahren bzw. eine derartige Brennstoffzellenanlage sind z.B. aus der EP 0596 367 A1 bekannt.

Es sind mittlerweile eine Vielzahl von unterschiedlichen Arten von Brennstoffzellenanlagen bekannt, die sich im Hinblick auf ihren Aufbau, die Reaktanten, die verwendeten Elektrolyte sowie im Hinblick auf die notwendigen Betriebstemperaturen unterscheiden. Beispielsweise ist bei einer Polymer-Elektrolyt-Membran (PEM)-Brennstoffzelle zwischen einer gasdurchlässigen Anode und einer gasdurchlässigen Kathode eine Polymer-elektrolyt-Membran angeordnet, die für Wasserstoffprotonen durchlässig ist. Beim Betrieb werden einer derartigen PEM-Brennstoffzelle zur Erzeugung elektrischen Stroms als Reaktanten üblicherweise anodenseitig ein Brenngas, beispielsweise Wasserstoff, und kathodenseitig Luft oder Sauerstoff zugeführt.

Da eine einzige Brennstoffzelle eine Spannung von lediglich etwa 0,7 bis 0,9 Volt liefert, sind mehrere Brennstoffzellen elektrisch in Serie zu einem Stapel miteinander verbunden. Die einzelnen Brennstoffzellen sind hierbei üblicherweise durch eine bipolare Platte voneinander getrennt. Die bipolare Platte weist eine Struktur, z.B. eine Noppenstruktur, auf und liegt an der Anode bzw. an der Kathode an. Durch die Struktur ist ein Gasraum zwischen der bipolaren Platte und der anliegenden Anode bzw. Kathode gebildet, durch den der bzw. die Reaktanten strömen. Die Bipolarplatte kann beispielsweise aus zwei an ihren Rändern miteinander verschweißten Blechen gebildet sein, die zwischen sich einen Kühlmittelraum für den Durchfluss eines Kühlmittels bilden. Zwischen den Brennstoffzellen des Brennstoffzellenstapels sind teilweise noch weitere Bauteile wie z.B. Druckkissen angeordnet. Der Brennstoffzellenstapel ist endseitig meist durch jeweils eine Polplatte abgeschlossen.

Beim Betrieb einer PEM-Brennstoffzelle kann es aufgrund folgender Ursachen zu einer Reaktanten-Unterversorgung eines Teilbereiches eines Gasraumes und somit zu einer Verringerung der Brennstoffzellenspannung kommen:
a) Beim Betrieb wandern Wasserstoffprotonen durch den Elektrolyten auf die Sauerstoffseite und reagieren mit dem Sauerstoff. Dabei fällt Reaktionswasser an und sammelt sich in dem Kathodengasraum an.
b) Durch die üblicherweise vorgenommene Befeuchtung der Reaktanten vor ihrem Eintritt in die Brennstoffzelle wird Wasser in einen Gasraum eingebracht und sammelt sich darin an.
c) Je nach dem Reinheitsgrad der verwendeten Reaktionsgase fallen Inertgase an und sammeln sich in einem Gasraum an.

Vorzugsweise sammeln sich das Wasser bzw. die Inertgase in den letzten Brennstoffzellen eines Brennstoffzellenstapels bzw. bei einer Brennstoffzellenanlage mit mehreren kaskadenartig in Reihe nacheinander angeordneten Brennstoffzellenstapeln in dem letzten Brennstoffzellenstapel an. Diese Brennstoffzellen (bzw. dieser Brennstoffzellenstapel) werden (wird) daher in gewissen Zeitabständen gespült, d.h. über ein Spülventil wird eine gasausgangsseitig an den Stapel angeschlossene Spülleitung geöffnet, so dass das angesammelte Wasser und die Inertgase ausgetragen werden. Die letzte Brennstoffzelle oder der letzte Brennstoffzellenstapel werden daher auch als Spülzelle bzw. als Spülzellenstapel bezeichnet.

Aus der EP 0596 367 A1 ist es bekannt, eine Ansammlung von Wasser und Inertgas in einem Gasraum einer Brennstoffzelle durch Erfassung eines Spannungsabfalls zwischen zwei Kontakten zu detektieren, die zwischen zwei unmittelbar benachbarten Brennstoffzellen in Stapelrichtung des Brennstoffzellenstapels voneinander beabstandet angeordnet sind. Wenn die Brennstoffzellen mit nur geringem Abstand voneinander aufeinander gestapelt sind, erweist sich jedoch eine derartige Spannungserfassung in Stapelrichtung als problematisch.

Der Erfindung liegt die Aufgabe zugrunde, ein Verfahren der eingangs genannten Art und eine Brennstoffzellenanlage anzugeben, die es erlauben, auf einfache Weise und mit hoher Zuverlässigkeit auch bei in geringem Abstand aufeinander gestapelten Brennstoffzellen eine Reaktanten-Unterversorgung in einem Teilbereich eines Gasraumes einer Brennstoffzelle zu detektieren, um rechtzeitig Gegenmaßnahmen einleiten zu können.

Die auf das Verfahren gerichtete Aufgabe wird gelöst durch ein Verfahren gemäß Patentanspruch 1. Die auf die Brennstoffzellenanlage gerichtete Aufgabe wird gelöst durch eine Brennstoffzellenanlage gemäß Patentanspruch 6. Vorteilhafte Ausgestaltungen des Verfahrens bzw. der Brennstoffzellenanlage sind jeweils Gegenstand der Unteransprüche.

Die Erfindung geht hierbei von der Überlegung aus, dass von benachbarten, gut arbeitenden Brennstoffzellen des Brennstoffzellenstapels ein konstanter Strom durch die teilweise unterversorgte Brennstoffzelle getrieben wird. Aufgrund von Stromdichteverschiebungen arbeitet ein unterversorgter Teilbereich der Brennstoffzelle in einem anderen Arbeitspunkt als ein normal versorgter Teilbereich der Brennstoffzelle. Hierdurch bedingt ist die von der Brennstoffzelle erzeugte Spannung in dem unterversorgten Bereich kleiner als in dem normal versorgten Teilbereich der Brennstoffzelle. Hierdurch kommt es in Bauelementen, die in Stapelrichtung des Brennstoffzellenstapels benachbart zu der Brennstoffzelle sind, zu Ausgleichsströmen senkrecht zur Stapelrichtung. In Abhängigkeit von dem Flächenwiderstand des Bauelementes ist hierdurch ein Spannungsabfall senkrecht zur Stapelrichtung erfassbar. Überraschenderweise hat sich herausgestellt, dass dieser Spannungsabfall in der Praxis bereits für eine Detektierung der Unterversorgung eines Teilbereiches eines Gasraumes einer Brennstoffzelle ausreichend ist. Ein derartiger Spannungsabfall ausschließlich senkrecht zur Stapelrichtung kann auch bei nur geringen Abständen der aufeinander gestapelten Brennstoffzellenbauteile zueinander erfolgen. Es ist somit eine besonders einfache Möglichkeit einer Detektierung einer Unterversorgung gegeben.

Wie sich weiterhin herausgestellt hat, kann darüber hinaus auch eine Reaktanten-Unterversorgung detektiert werden, die auf mit den Reaktanten eingebrachter Fremdkörper, z.B. Staubpartikel oder Salzkristalle, die einen Teil eines Gasraumes verstopfen, zurückzuführen ist. Auch eine teilweise oder vollständige Undurchlässigkeit eines Teilbereiches eines Gasraumes für einen Reaktanten, z.B. aufgrund von Fertigungsfehlern oder -toleranzen, ist detektierbar. Durch die Möglichkeit der Detektierung von Wasseransammlungen kann Korrosion in den Brennstoffzellen wirkungsvoll vermieden werden.

Da Bipolarplatten aufgrund ihrer Ausgestaltung und/oder des verwendeten Materials eine vergleichsweise geringe Leitfähigkeit senkrecht zur Stapelrichtung aufweisen, ist eine besonders gute Erfassung des Spannungsabfalls dadurch möglich, dass der Spannungsabfall an einer den Gasraum ausbildenden Bipolarplatte gemessen wird. Der Spannungsabfall kann jedoch auch an anderen von dem Strom des Brennstoffzellenstapels durchflossenen Bauteilen erfasst werden, so z.B. an der von dem Gasraum versorgten Elektrode oder an anderen Bauteilen wie Druckkissen oder Kühlelementen, die in Stapelrichtung zwischen der Brennstoffzelle und einer benachbarten Brennstoffzelle oder einer Polplatte angeordnet sind.

Gemäß einer besonders vorteilhaften Ausgestaltung des erfindungsgemäßen Verfahrens wird der Spannungsabfall zwischen dem Bereich der Gaszufuhr zu dem Gasraum und dem Bereich der Gasabfuhr aus dem Gasraum erfasst, da sich Inertgase oder Wasser insbesondere im Bereich der Gasabfuhr eines Gasraumes ansammeln und somit ein maximaler Spannungsabfall erfassbar ist.

In Abhängigkeit von dem erfassten Spannungsabfall kann dann eine Spülung des Gasraumes durchgeführt werden.

Eine erfindungsgemäße Brennstoffzellenanlage weist zumindest einen Brennstoffzellenstapel mit zwei Spannungsabgriffen und eine Einrichtung zur Erfassung der Spannung zwischen den beiden Spannungsabgriffen zur Detektierung einer Reaktanten-Unterversorgung in einem Teilbereich eines Gasraumes einer Brennstoffzelle auf. Die beiden Spannungsabgriffe sind hierbei senkrecht zur Stapelrichtung des Brennstoffzellenstapels voneinander beabstandet angeordnet. Während bei der bekannten Brennstoffzellenanlage die Spannungsabgriffe in Stapelrichtung voneinander beabstandet sind, sind die Kontakte erfindungsgemäß ausschließlich senkrecht zur Stapelrichtung voneinander beabstandet angeordnet. Die für das erfindungsgemäße Verfahren genannten Überlegungen und Vorteile gelten entsprechend für die erfindungsgemäße Brennstoffzellenanlage.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: einen Ausschnitt aus einem Brennstoffzellenstapel mit einer Einrichtung zur Inertgasabfuhr,
- FIG 2: eine besonders vorteilhafte Anordnung von Spannungsabgriffen an einer Bipolarplatte,
- FIG 3: Strom-Spannungskennlinien der Spannungsabgriffe der Bipolarplatte der FIG 2.

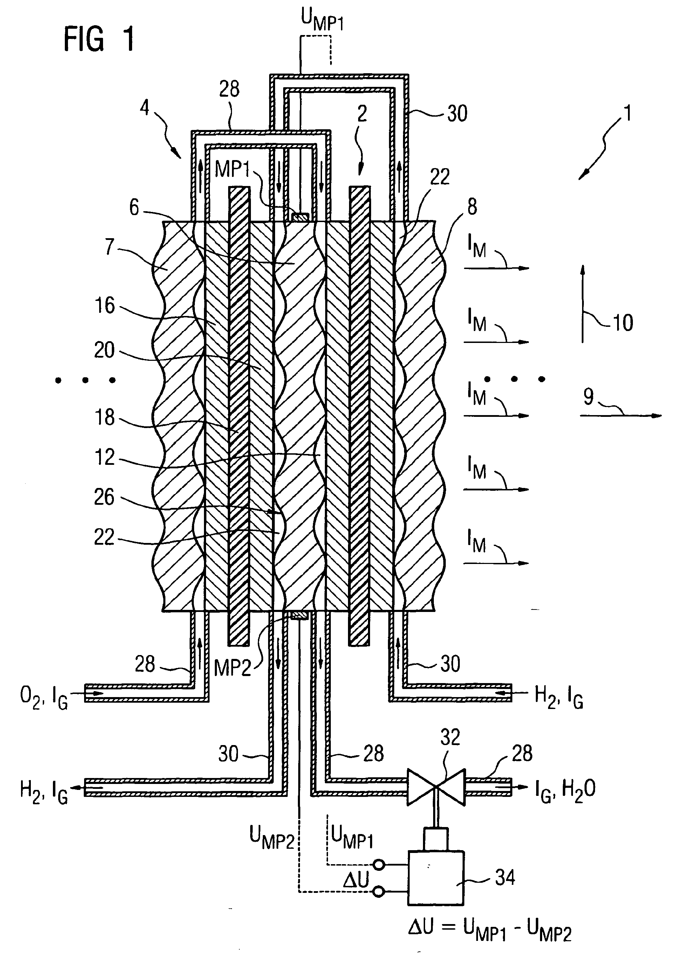

In FIG 1 ist in schematischer Darstellung ein Ausschnitt aus einem Brennstoffzellenstapel 1 gezeigt. In diesem Ausschnitt sind zwei Brennstoffzellen 2,4 dargestellt, die über eine bipolare Platte 6 miteinander elektrisch in Reihe geschaltet sind. Die Brennstoffzelle 2 kann über eine Bipolarplatte 8 und die Brennstoffzelle 4 über eine Bipolarplatte 7 mit jeweils weiteren Brennstoffzellen elektrisch in Reihe geschaltet sein, so dass ein Strom IM durch sämtliche Brennstoffzellen 2, 4 des Brennstoffzellenstapels 1 getrieben wird.

Jede Brennstoffzelle 2, 4 umfasst einen Kathodengasraum 12, eine Kathode 16, eine Polymer-Elektrolyt-Membran (PEM) 18, eine Anode 20 und einen Anodengasraum 22. Der Kathodengasraum 12 und der Anodengasraum 22 werden durch Vertiefungen 26 in der an der Kathode 16 bzw. der Anode 20 anliegenden Seite einer Bipolarplatte 6, 7, 8 ausgebildet.

Die Kathodengasräume 12 und die Anodengasräume 22 der Brennstoffzellen 2, 4 sind mittels jeweils eines eigenen Leitungssystems 28 bzw. 30 dergestalt miteinander verbunden, dass die Strömungsrichtung eines kathodenseitigen Gasgemisches 02, IG und eines anodenseitigen Gasgemisches H2, IG in den Gasräumen jeder Zelle 2, 4 und den benachbarten Zellen gegensinnig ist.

An der bipolaren Platte 6 sind zum Spannungsabgriff Kontakte MP1, MP2 angebracht, an denen die an der Bipolarplatte 6 senkecht zur Stapelrichtung der Brennstoffzellen 2,4 abfallende Spannung ΔU erfasst wird. Die Kontakte MP1 und MP2 sind hierzu senkrecht zur Stapelrichtung 9 der Brennstoffzellen 2, 4 voneinander beabstandet. Die Stapelrichtung der Brennstoffzellen 2, 4 ist hierbei mit 9, die Richtung senkrecht zur Stapelrichtung 9 ist mit 10 bezeichnet. Eine Einrichtung 34 dient zur Erfassung des Spannungsabfalls ΔU = U_{MP1} - U_{MP2} zwischen den beiden Messpunkten MP1 und MP2.

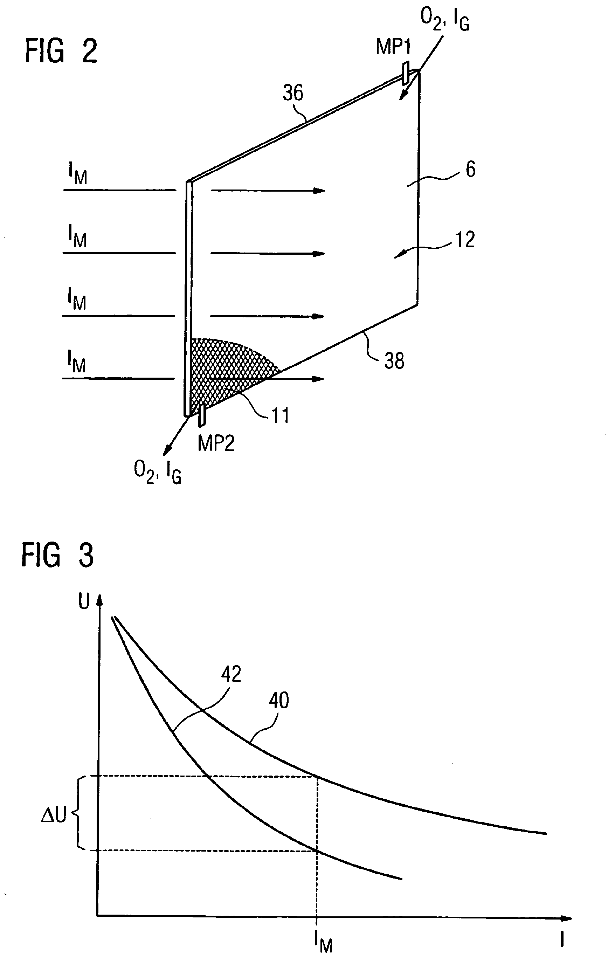

FIG 2 zeigt in vereinfachter, perspektivischer Darstellung den durch die Bipolarplatte 6 ausgebildeten Kathodengasraum 12 der FIG 1. Über die Messpunkte MP1 und MP2 erfolgt der Spannungsabgriff ΔU. Die Spannungsabgriffe sind an zwei einander diagonal gegenüberliegenden Randbereichen 36, 38 der Bipolarplatte 6 angeordnet. Der Spannungsabgriff am Messpunkt MP1 erfolgt hierbei im Bereich der Gaszufuhr für Sauerstoff zu dem von der Bipolarplatte 6 ausgebildeten Gasraum 12 und der Spannungsabgriff am Messpunkt MP2 im Bereich der Gasabfuhr für Sauerstoff aus diesem Gasraum.

In FIG 3 ist mit 40 die Strom-Spannungskennlinie der Messpunkte MP1 und MP2 bei gleichmäßig versorgtem Gasraum 12 der Brennstoffzelle 4 bezeichnet. Bei einer Unterversorgung des Teilbereiches 11 des Kathodengasraumes 12 der Brennstoffzelle 4, z.B. aufgrund einer Ansammlung von Inertgas oder Wasser, aufgrund von Fremdkörpern oder aufgrund von Fertigungsfehlern, folgt das Spannungspotenzial des Messpunktes MP2 der mit 42 bezeichneten Kennlinie, d.h. das Spannungspotenzial des Messpunktes MP2 sinkt im Vergleich zum Spannungspotenzial des Messpunktes MP1 ab. Die Differenz ΔU der beiden Spannungspotenziale ist abhängig von der Leitfähigkeit der Bipolarplatte 6 zwischen den beiden Messpunkten MP1, MP2 und der Stromdichte des durch die Brennstoffzelle getriebenen Stromes IM.

Bezogen auf eine Spannung UZ der Brennstoffzellen 2, 4 von jeweils etwa 0,7 V kann dieser Spannungsabfall ΔU bei hohem Anteil an Inertgas IG bis zu 20 % der Zellspannung UZ erreichen. Typisch sind Spannungsabfälle U im Bereich zwischen 10 und 100 mV.

Die Einrichtung 34 zur Erfassung der Spannung ΔU dient gleichzeitig als Steuerungseinrichtung zur Steuerung der Einstellung eines Spülventils 32 zur Spülung des Gasraumes 12. Das Spülventil 32 ist in das Leitungssystem 28 ausgangsseitig des Kathodengasraums 12 der Brennstoffzelle 4 eingebaut. Als Parameter zur Einstellung des Ventils 32 wird der Spannungsabfall ΔU verwendet.

Gemäß einer vorteilhaften Ausgestaltung der Erfindung besteht der Brennstoffzellenstapel 1 aus einer Anzahl von beispielsweise n = 70 elektrisch in Reihe geschalteten Brennstoffzellen 2, 4, wobei die Brennstoffzelle 4 der (n - 1)-ten oder vorletzten Brennstoffzelle und die Brennstoffzelle 2 der n-ten oder letzten Brennstoffzelle des Brennstoffzellenstapels 1 entsprechen.

Beim Betrieb des Brennstoffzellenstapels 1 erfolgt die Zuführung des anoden- und des kathodenseitigen Gasgemisches H2, IG; 02, IG auf gegenüberliegenden Seiten des Brennstoffzellenstapels 1.
Dies bedeutet, dass über das Leitungssystem 30 eingangsseitig dem Anodengasraum 22 der Brennstoffzelle 4 frisches anodenseitiges Gasgemisch H2, IG zugeführt wird. Das anodenseitige Gasgemisch ist im Ausführungsbeispiel technisch reines Wasserstoffgas H2, das noch über einen Anteil an Inertgas IG von < 0,005 Vol.% verfügt. Das über das Leitungssystem 28 eingangsseitig dem Kathodengasraum 12 der Brennstoffzelle 2 zugeführte kathodenseitige Gasgemisch 02, IG hat bereits eine Anzahl von (n-1) in Strömungsrichtung vorgeschalteten Brennstoffzellen des Brennstoffzellenstapels 1 durchströmt. Infolge der elektrochemischen Reaktion von Wasserstoff H₂ und Sauerstoff O₂ zu Wasser H₂O in den Brennstoffzellen weist das in den Kathodengasraum 12 der Brennstoffzelle 2 einströmende kathodenseitige Gasgemisch, das ursprünglich technisch reines Sauerstoffgas O₂ mit einem Anteil an Inertgas IG von < 0,5 Vol.% war, infolge des Aufbrauchs des Sauerstoffs 02 in den vorausgegangenen (n-1) Brennstoffzellen einen erheblichen Anteil an Wasser H₂O und Inertgas I_{G} auf. Hierdurch steht dem bereits stark mit Inertgas I_{G} angereicherten kathodenseitigen Gasgemisch O₂, I_{G}, H₂O in den Kathodengasräumen 12 der Brennstoffzelle 2 ein beinahe noch unverbrauchtes anodenseitiges Gasgemisch H₂, I_{G} in dem Anodengasraum 22 der Brennstoffzelle 2 gegenüber.

Der Gasverbrauch der Brennstoffzelle 2 sorgt im Kathodengasraum 12 für einen stetigen Gasfluss und eine leichte Aufkonzentration des Inertgasanteils in Strömungsrichtung. Bei geschlossenem Ventil 32 wird dem kathodenseitigen Gasgemisch O₂, I_{G}, das in den Kathoden-gasraum 12 der Brennstoffzelle 2 einströmt, der noch übrige Sauerstoff O₂ entzogen. In Strömungsrichtung steigt deshalb im Kathodengasraum 12 die Konzentration an Inertgas IG auf nahezu 100% an.

In Abhängigkeit von diesem Spannungsabfall ΔU, der mit ansteigendem Anteil an Inertgas IG und Wasser H₂O, d.h. mit dem Aufbrauch des Sauerstoffanteils O₂, ansteigt, wird das Ventil 32 mittels des Einstellgliedes 34 eingestellt oder geführt. Bei geöffnetem Ventil 32 wird Inertgas-reiches Gasgemisch (hier kathodenseitig) aus dem Brennstoffzellen-stapel 1 ausgetragen. Der aus dem Brennstoffzellenstapel 1 ausgetragene Teil des kathodenseitigen Gasgemisches, der zum größten Teil aus inerten Gasen, also Inertgas I_{G} und Wasser H₂O, besteht, wird eingangsseitig des Brennstoffzellenstapels 1 durch frisches kathodenseitiges Gasgemisch O₂, I_{G}, hier technisch reines Sauerstoffgas, ersetzt. Bei geschlossenem Ventil 32 schreitet der Anstieg des Anteils an Inertgas I_{G} und Wasser H₂O infolge des Verbrauches von Sauerstoff O₂ schnell voran.

Bei der Einstellung des Ventils 32 kann in zweierlei Weise vorgegangen werden. Einerseits kann die Steuerungseinrichtung 34 einen Regler umfassen, der den Öffnungsgrad des Ventils 32 unmittelbar an die Differenz zwischen dem Spannungsabfall ΔU und einem Referenzwert anpasst. Andererseits kann die Steuerungseinrichtung 34 das Ventil 32 so steuern, dass das Ventil 32 nach Überschreiten einer vorgegebenen Schwellspannung von ΔU geöffnet wird und nach dem Durchlassen einer definierten Gasmenge (definierte Öffnungszeit) wieder geschlossen wird.

Der in Figur 1 gezeigte Aufbau zur Entsorgung des Anteils an Inertgas IG und Wasser H2O des kathodenseitigen Gasgemisches kann in gleicher Weise auch an der ersten (n = 1) und zweiten (n = 2) Brennstoffzelle des Brennstoffzellenstapels 1 installiert sein, um die Entsorgung des Anteils an Inertgas IG des anodenseitigen Gasgemisches H2, IG zu gewährleisten.

Grundsätzlich ist das erfindungsgemäße Verfahren nicht auf die Anwendung von PEM-Brennstoffzellen begrenzt, sondern kann ebenso bei allen anderen Brennstoffzellentypen, z.B. bei Brennstoffzellen mit anderen Protonen-, mit Hydroxidionen- oder mit Sauerstoffionen-leitenden Elektrolyten, verwendet werden.

Durch Erfassung und Überwachung der Zellspannung jeder Zelle des Brennstoffzellenstapels kann eine unzureichend arbeitende Zelle innerhalb des Brennstoffzellenstapels genau identifiziert werden. Eine genaue Identifikation, welcher der beiden Gasräume der Zelle unzureichend arbeitet, ist hierdurch jedoch nicht möglich. Durch die erfindungsgemäße Erfassung der Spannung senkrecht zur Stapelrichtung zwischen sämtlichen Brennstoffzellen kann jedoch zusätzlich auch noch der unzureichend arbeitende Gasraum der betreffenden Zelle identifiziert werden. Es ist somit eine vollständige und automatisierbare Überwachung der Verhältnisse in einem Brennstoffzellenstapel möglich, wodurch Störungen beim Betrieb des Brennstoffzellenstapels verhindert bzw. gezielt, schnell und mit geringem Aufwand behoben und Ausfallzeiten somit gering gehalten werden können

Für eine umfassende Überwachung des Brennstoffzellenstapels auf Reaktanten-Unterversorgungen in Teilbereichen von Gasräumen der Brennstoffzellen können an mehreren Stellen des Brennstoffzellenstapels, vorzugsweise zwischen jeder der Brennstoffzellen des Brennstoffzellenstapels, Spannungsabgriffe zur Erfassung von Spannungsabfällen in Stapelrichtung des Brennstoffzellenstapels und auch an mehreren Stellen Ventile 32 zum Ablassen von Wasser und Inertgas-haltigem Gasgemisch vorgesehen werden. Mittels einer zentralen Steuer- und Überwachungseinrichtung können automatisiert die Spannungen an diesen Spannungsabgriffen erfasst, Reaktanten-Unterversorgungen angezeigt und Gegenmaßnahmen, z.B. Öffnungen von Ventilen veranlasst werden.

## Patentansprüche

1. Verfahren zur Detektierung einer Reaktanten-Unterver-sorgung in einem Teilbereich (11) eines Gasraumes (12) einer Brennstoffzelle (2) eines Brennstoffzellenstapels (1) durch Erfassung eines Spannungsabfalls (ΔU),
**dadurch gekennzeichnet, dass** der Spannungsabfall (ΔU) senkrecht zur Stapelrichtung (9) des Brennstoffzellenstapels (1) erfasst wird.

2. Verfahren nach Anspruch 1,
**dadurch gekennzeichnet, dass** der Spannungsabfall (ΔU) an einer den Gasraum (12) ausbildenden Bipolarplatte (6) erfasst wird.

3. Verfahren nach Anspruch 2,
**dadurch gekennzeichnet, dass** der Spannungsabfall (ΔU) zwischen zwei einander gegenüberliegenden Randbereichen (36, 38) der Bipolarplatte (6) erfasst wird.

4. Verfahren nach Anspruch 2 oder 3,
**dadurch gekennzeichnet, dass** der Spannungsabfall (ΔU) an der Bipolarplatte (6) zwischen dem Bereich der Gaszufuhr zu dem Gasraum (12) und dem Bereich der Gasabfuhr aus dem Gasraum (12) erfasst wird.

5. Verfahren nach einem der vorhergehenden Ansprüche,
**dadurch gekennzeichnet, dass**-in Abhängigkeit von dem erfassten Spannungsabfall (ΔU) eine Spülung des Gasraumes (12) durchgeführt wird.

6. Brennstoffzellenanlage mit zumindest einem Brennstoffzellenstapel (1) mit zwei Spannungsabgriffen (MP1, MP2) und mit einer Einrichtung (34) zur Erfassung der Spannung (ΔU) zwischen den beiden Spannungsabgriffen zur Detektierung einer Reaktanten-Unterversorgung in einem Teilbereich (11) eines Gasraumes (12) einer Brennstoffzelle (2), **dadurch gekennzeichnet, dass** die beiden Spannungsabgriffe (MP1, MP2) senkrecht zur Stapelrichtung (9) des Brennstoffzellenstapels (1) voneinander beabstandet angeordnet sind.

7. Brennstoffzellenanlage nach Anspruch 6,
**dadurch gekennzeichnet, dass** die Spannungsabgriffe (MP1, MP2) an einer den Gasraum (12) ausbildenden Bipolarplatte (6) angeordnet sind.

8. Brennstoffzellenanlage nach Anspruch 7,
**dadurch gekennzeichnet, dass** die Spannungsabgriffe (MP1, MP2) an zwei einander gegenüberliegenden Randsbereichen (36, 38) der Bipolarplatte (6) angeordnet sind.

9. Brennstoffzellenanlage nach Anspruch 7 oder 8,
**dadurch gekennzeichnet, dass** der eine Spannungsabgriff (MP1) im Bereich der Gaszufuhr zu dem Gasraum (12) und der andere Spannungsabgriff (MP2) im Bereich der Gasabfuhr aus dem Gasraum (12) angeordnet ist.

10. Brennstoffzellenanlage nach einem der Ansprüche 6 bis 9,
**dadurch gekennzeichnet, dass** sie ein Spülventil (32) zur Spülung des Gasraumes (12) der Brennstoffzelle und eine Steuerungseinrichtung (34) zur Steuerung der Einstellung des Spülventils (32) in Abhängigkeit von der gemessenen Spannung (ΔU) aufweist.

## Claims

1. Method for detection of inadequate reactant supply in a subarea (11) of a gas area (12) of a fuel cell (2) in a fuel cell stack (1) by detection of a voltage drop (ΔU),
**characterized in that** the voltage drop (ΔU) is detected at right angles to the stack direction (9) of the fuel cell stack (1) .

2. Method according to Claim 1,
**characterized in that** the voltage drop (ΔU) is detected at a bipolar plate (6) which forms the gas area (12).

3. Method according to Claim 2,
**characterized in that** the voltage drop (ΔU) is detected between two mutually opposite edge areas (36, 38) of the bipolar plate (6).

4. Method according to Claim 2 or 3,
**characterized in that** the voltage drop (ΔU) is detected at the bipolar plate (6), between the area of the gas supply to the gas area (12) and the area of the gas outlet from the gas area (12).

5. Method according to one of the preceding claims,
**characterized in that** the gas area (12) is purged as a function of the detected voltage drop (ΔU).

6. Fuel cell installation having at least one fuel cell stack (1) with two voltage taps (MP1, MP2) and with a device (34) for detection of the voltage (ΔU) between the two voltage taps in order to detect inadequate reactant supply in a subarea (11) of a gas area (12) of a fuel cell (2), **characterized in that** the two voltage taps (MP1, MP2) are arranged at a distance from one another, at right angles to the stack direction (9) of the fuel cell stack (1).

7. Fuel cell installation according to Claim 6,
**characterized in that** the voltage taps (MP1, MP2) are arranged on a bipolar plate (6) which forms the gas area (12).

8. Fuel cell installation according to Claim 7, **characterized in that** the voltage taps (MP1, MP2) are arranged on two mutually opposite edge areas (36, 38) of the bipolar plate (6).

9. Fuel cell installation according to Claim 7 or 8,
**characterized in that** one voltage tap (MP1) is arranged in the area of the gas supply to the gas area (12), and the other voltage tap (MP2) is arranged in the area of the gas outlet from the gas area (12).

10. Fuel cell installation according to one of Claims 6 to 9,
**characterized in that** the installation has a purging valve (32) for purging the gas area (12) of the fuel cell, and has a control device (34) for controlling the setting of the purging valve (32) as a function of the measured voltage (ΔU).

## Revendications

1. Procédé de détection d'un manque d'alimentation en réactifs dans une zone ( 11 ) partielle d'un espace ( 12 ) pour du gaz d'une pile ( 2 ) à combustible d'un empilement ( 1 ) de piles à combustible, en relevant une chute ( ΔU ) de tension,
**caractérisé en ce que** l'on relève la chute ( ΔU ) de tension perpendiculairement à la direction ( 9 ) d'empilage de l'empilement ( 1 ) de piles à combustible.

2. Procédé suivant la revendication 1,
**caractérisé en ce que** l'on relève la chute ( ΔU ) de tension sur une plaque ( 6 ) bipolaire formant l'espace ( 12 ) pour du gaz.

3. Procédé suivant la revendication 2,
**caractérisé en ce que** l'on relève la chute ( ΔU ) de tension entre deux zones ( 36, 38 ) de bord opposées de la plaque ( 6 ) bipolaire.

4. Procédé suivant la revendication 2 ou 3,
**caractérisé en ce que** l'on relève la chute ( ΔU ) de tension sur la plaque ( 6 ) bipolaire entre la zone d'apport du gaz à l'espace ( 12 ) pour du gaz et la zone d'évacuation du gaz de l'espace ( 12 ) pour du gaz.

5. Procédé suivant l'une des revendications précédentes,
**caractérisé en ce que** l'on effectue un lavage de l'espace ( 12 ) pour du gaz en fonction de la chute ( ΔU ) de tension relevée.

6. Installation de pile à combustible, comprenant au moins un empilement ( 1 ) de piles à combustible ayant deux prises ( MP1, MP2 ) de tension et un dispositif ( 34 ) de relevé de la tension ( ΔU ) entre les deux prises de tension pour détecter un manque d'alimentation en réactifs dans une zone ( 11 ) partielle d'un espace ( 12 ) pour du gaz d'une pile ( 2 ) à combustible, **caractérisée en ce que** les deux prises ( MP1, MP2 ) de tension sont disposées à distance l'une de l'autre, perpendiculairement à la direction ( 9 ) d'empilage de l'empilement ( 1 ) de piles à combustible.

7. Installation de piles à combustible suivant la revendication 6,
**caractérisée en ce que** les prises ( MP1, MP2 ) de tension sont disposées sur une plaque ( 6 ) bipolaire formant l'espace ( 12 ) pour du gaz.

8. Installation de piles à combustible suivant la revendication 7, **caractérisée en ce que** les prises ( MP1, MP2 ) de tension sont disposées sur deux parties ( 36, 38 ) de bord opposées l'une à l'autre de la plaque ( 6 ) bipolaire.

9. Installation de piles à combustible suivant la revendication 7 ou 8, **caractérisée en ce que** l'une des prises ( MP1 ) de tension est disposée dans la zone de l'apport de gaz à l'espace ( 12 ) pour du gaz et l'autre prise ( MP2 ) de tension dans la zone de l'évacuation du gaz de l'espace ( 12 ) pour du gaz.

10. Installation de piles à combustible suivant l'une des revendications 6 à 9,
**caractérisée en ce qu'**elle a une vanne ( 32 ) de lavage pour le lavage de l'espace ( 12 ) pour du gaz de la pile à combustible et un dispositif ( 34 ) de commande pour commander le réglage de la vanne ( 32 ) de lavage en fonction de la tension ( ΔU ) mesurée.
